(19) **Europäisches Patentamt European Patent Office Office européen des brevets**

(11) **EP 4 640 901 A1**

(12) **EUROPEAN PATENT APPLICATION**
published in accordance with Art. 153(4) EPC

(43) Date of publication:
**29.10.2025 Bulletin 2025/44**

(21) Application number: **23907638.3**

(22) Date of filing: **15.12.2023**

(51) International Patent Classification (IPC):
**C22C 38/38** (2006.01)    **C22C 38/22** (2006.01)
**C22C 38/06** (2006.01)    **C22C 38/28** (2006.01)
**C22C 38/26** (2006.01)    **C22C 38/00** (2006.01)
**C21D 8/02** (2006.01)    **C21D 9/46** (2006.01)
**C23C 2/06** (2006.01)

(52) Cooperative Patent Classification (CPC):
**C21D 8/02; C21D 9/46; C22C 38/00; C22C 38/06;
C22C 38/22; C22C 38/26; C22C 38/28;
C22C 38/38; C23C 2/06**

(86) International application number:
**PCT/KR2023/020827**

(87) International publication number:
**WO 2024/136353 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2022 KR 20220181084**

(71) Applicant: **POSCO Co., Ltd
Pohang-si, Gyeongsangbuk-do 37859 (KR)**

(72) Inventors:
• **CHOI, Kang-Hyun**
  **Gwangyang-si, Jeollanam-do 57807 (KR)**
• **AHN, Yeon-Sang**
  **Gwangyang-si, Jeollanam-do 57807 (KR)**
• **HYUN, Cheol-Seung**
  **Gwangyang-si, Jeollanam-do 57807 (KR)**

(74) Representative: **Meissner Bolte Partnerschaft
mbB
Patentanwälte Rechtsanwälte
Postfach 86 06 24
81633 München (DE)**

(54) **STEEL SHEET AND METHOD FOR MANUFACTURING SAME**

(57)    A steel sheet and a method for manufacturing same are provided. The steel sheet of the present invention is excellent in ductility, formability, and weldability, and thus can be used for automobile structural members.

[FIG.1]

**EP 4 640 901 A1**

## Description

Technical Field

The present disclosure relates to manufacturing of a steel sheet used for automotive structural parts, and more particularly, to a steel sheet having excellent ductility, formability and weldability, and a method for manufacturing the same.

Background Art

Recently, regulations for environmental conservation in the automobile industry have become increasingly stricter. Accordingly, carbon emission reductions and fuel efficiency regulations have also become increasingly stricter, and the use of a high-strength steel material has also been increased to ensure passenger safety in the event of an accident such as a collision. Also, high-strength steel having excellent yield strength has been used for structural members such as a member, a seat rail, and a pillar to improve impact resistance of a vehicle body. However, increasing strength of a steel sheet may lead to a decrease in ductility and formability. To address this, the development of a material simultaneously satisfying high strength and high formability may be necessary. Generally, as strength of a steel sheet increases, elongation may decrease, which may reduce workability, and thus, it may be necessary to develop a material which may compensate for the above issue. Generally, solid-solution strengthening, precipitation strengthening, grain refinement strengthening, and transformation strengthening have been studied as methods for strengthening steel. However, among the above methods, in the case of a steel material using solid-solution strengthening and grain refinement, it may be difficult to manufacture high-strength steel having a tensile strength of 490 MPa or higher.

Precipitation-strengthened high-strength steel may relate to a technique to ensure strength by precipitating carbon and nitride by adding carbon and nitride forming elements such as Nb, Ti, and V, thereby refining grains through grain growth suppression by fine precipitates. The technique may have the advantage of ensuring high strength at low manufacturing costs, but may have the disadvantage that a recrystallization temperature may rapidly increase due to fine precipitates, and to ensure ductility by causing sufficient recrystallization, high-temperature annealing may need be performed. Also, as for precipitation-strengthened steel strengthened by precipitating carbon and nitrides in a ferrite matrix, there may be the problem that it may be difficult to obtain high-strength steel having a strength of 600 MPa or higher.

Various types of transformation-strengthened high-strength steel have been developed, such as dual phase (DP) steel including a soft ferrite matrix and hard martensite two-phase, transformation-induced plasticity (TRIP) steel ensuring high ductility by using transformation-induced plasticity of retained austenite, and complexed phase (CP) steel having a composite structure of ferrite and hard bainite or martensite. Recently, a high-strength steel sheet has been required for automobiles to improve fuel efficiency and durability, and demand for a high-strength steel sheet having a tensile strength of 780 MPa or more as a body structure or reinforcement material for collision safety and passenger protection has increased. Among the steels, DP steel may have excellent ductility and may be the most commonly used automobile steel sheet, but DP steel may have the disadvantages of low yield ratio (YR) and deteriorated formability and workability. Further, as a steel sheet has higher high-strength, cracks and wrinkles may occur during press forming of automobile parts, such that it may be difficult to manufacture complex parts. Among high-strength steels, TRIP and XF steels may have higher ductility and better yield ratio than general DP steels, and may thus have good workability. However, there may be the disadvantage of deteriorated weldability due to addition of large amounts of Si and Al to ensure high elongation. To overcome these shortcomings of general high-strength steels, by manufacturing a steel material having a component system with good weldability by reducing Si and Al components and satisfying formability and ductility of a predetermined level or more, high-strength steel may be applied more widely to more complex parts. This may be achieved by using quenching and partitioning (Q&P) heat treatment, the latest heat treatment technique which may ensure retained austenite.

As a prior art for simultaneously ensuring ductility and workability of a high-strength steel sheet, the invention disclosed in cited document 1 is suggested. In the invention disclosed in cited document 1, it is necessary to control the heat treatment temperature to ensure high elongation by forming retained austenite through precise control over slow cooling and rapid cooling temperatures.

Another prior art is the invention disclosed in cited document 2. The invention disclosed in cited document 2 is characterized by manufacturing a steel sheet having a high yield ratio through a Q&P process and a painting treatment.

Another prior art is the invention disclosed in cited document 3. The invention disclosed in cited document 3 provides a method for manufacturing a high-strength cold-rolled steel sheet having a high bainite fraction by cooling to a bainite region. However, as compared to the Q&P process, the carbon partitioning effect may be low, and the elongation may be deteriorated.

[Prior art]

[Cited document]

(Cited document 1) Korean Laid-Open Patent Publication No. KR2018-0165176
(Cited document 1) Japanese Laid-Open Patent Publication No. JP2010-090432
(Cited document 1) Japanese Laid-Open Patent Publication No. JP2015-106696

Detailed description of present disclosure

Technical problems to solve

An aspect in the present disclosure is to a steel sheet which may be used mainly for automobile structural parts, and a method for manufacturing the same.

The technical problems to be achieved in the present disclosure are not limited to the technical problems mentioned above, and other technical problems not mentioned will be clearly understood by a person having ordinary skill in the technical field to which the present disclosure belongs from the description below.

Solution to Problem

An aspect in the present disclosure provides a steel sheet including,

by weight%, carbon (C): 0.06-0.16%, silicon (Si) : 0.8% or less (excluding 0%), manganese (Mn): 1.6-2.6%, molybdenum (Mo) : 0.40% or less (excluding 0%), chromium (Cr) : 1.0% or less (excluding 0%), phosphorus (P): 0.10% or less (excluding 0%), sulfur (S): 0.020% or less (excluding 0%), aluminum (sol.Al): 0.60% or less (excluding 0%), titanium (Ti): 0.001-0.04%, niobium (Nb): 0.001-0.04%, nitrogen (N): 0.01% or less (excluding 0%), boron (B): 0.010% or less (including 0%), and a balance of Fe and inevitable impurities, wherein C, Si, Mn, Cr and Mo satisfy relational expression 1 as below,
wherein the steel sheet has a microstructure including, by area%, ferrite of 20% or more and 40% or less, bainite and tempered martensite of 30% or more and 60% or less in total, and a remainder of fresh martensite and retained austenite, and in which an area fraction of the retained austenite is less than 5% (excluding 0%), and
wherein hole expandability (HER) is 30% or more, and a value by relational expression 2 for hole expandability (HER), yield strength (YS), tensile strength (TS) and elongation (EL) is 500 or more, and a yield ratio (YS/TS) is 0.65 or more:

```
[Relational expression 1]

C+Si/30+Mn/20+ (Cr+Mo)/5 ≥ 0.300
```

where Si, Mn, Cr and Mo indicate content% of steel components in a matrix structure of a 1/4t point of a thickness of a base steel sheet,

```
[Relational expression 2]

HER*EL*YS/TS≥500
```

An aspect in the present disclosure provides a method for manufacturing a steel sheet including

preparing and reheating a steel slab satisfying the steel composition and relational expression 1;
hot-rolling the reheated steel slab such that a finishing-rolling outlet temperature becomes Ar3-Ar3+50°C, coiling at 400-650°C and cooling to room temperature at an average cooling rate of 0.1°C/s or lower;
cold-rolling the cooled hot-rolled steel sheet at a reduction ratio of 40-70% and manufacturing a cold-rolled steel sheet;
continuously-annealing the cold-rolled steel sheet at a temperature of Ac3-50°C to Ac3-20°C;
primary-cooling the continuously-annealed cold-rolled steel sheet to a temperature range of 650-680°C at an average cooling rate of 10°C/s or lower, and secondary-cooling to a temperature range of 300-340°C at an average cooling rate of 5°C/s or higher;

reheating the secondary-cooled cold-rolled steel sheet to a temperature of Ms or higher and holding for 60 seconds or more; and

cooling the held cold-rolled steel sheet to a temperature of 150°C or lower at an average cooling rate of 5°C/s or higher.

Advantageous Effects of Invention

According to an aspect of the present disclosure, by optimizing an alloy composition and a manufacturing process, a high-strength steel sheet satisfying high ductility, which is a characteristic of DP steel, and having an excellent yield ratio (YS/TS) and hole expandability as compared to general DP steel may be effectively manufactured. Accordingly, by preventing processing defects such as cracks occurring during press forming, the steel sheet may be used variously for automotive structural members having complex shapes requiring high formability. Also, there may be the advantage of good weldability as compared to general TRIP steel by reducing Si and Al.

Brief Description of Drawings

FIG. 1 is an image indicating changes in relational expression HER*EL*YS/TS of hole expandability (HER), yield strength (YS), tensile strength (TS) and elongation (EL) according to relational expression 1 of inventive steel and comparative steel in an example of the present disclosure.

FIG. 2 is an image indicating changes in hole expandability (HER) according to relational expression 1 of inventive steel and comparative steel in an example of the present disclosure.

FIG. 3 is an image indicating changes in yield ratio according to relational expression 1 of inventive steel and comparative steel in an example of the present disclosure. Best Mode for Invention

The terminology used herein is intended only to refer to specific embodiments and is not intended to limit the present disclosure. The singular forms used herein include the plural forms as well, unless otherwise indicated. The term "including" used in the specification specifies a particular feature, region, integer, step, operation, element, and/or component, and does not exclude the presence or addition of other particular features, regions, integers, steps, operations, elements, components, and/or groups.

Unless otherwise defined, all terms, including technical and scientific terms, used herein may have the same meaning as is commonly understood by a person having ordinary skill in the art to which the present disclosure belongs. Terms defined in commonly used dictionaries may be additionally interpreted to have a meaning consistent with the relevant technical document and the present disclosure, and are not to be construed in an ideal or highly formal sense unless otherwise defined.

The present inventors confirmed thorough an experiment that, by optimizing the alloy composition and manufacturing process and including 20% or more and 40% or less of ferrite, 30% or more and 60% or less of bainite and tempered martensite in total, and a remainder of fresh martensite and retained austenite in the final microstructure, a yield ratio may be increased such that processability may improve as compared to general DP steel, and less than 5% of retained austenite may be formed during final cooling, ductility may be further improved, and suggested the present disclosure based on the results.

First, according to the present inventors, by hot-rolling a slab in which C, Si, Mn, Cr and Mo in the matrix structure of a base steel sheet 1/4t point are controlled to satisfy relational expression 1 such that the finishing-rolling outlet temperature is Ar3 to Ar3+50°C and coiling at 400-650°C, cooling to room temperature at an average cooling rate of 0.1°C/s or lower, a hot-rolled steel sheet in which carbides becoming nucleation sites for austenite during annealing is finely dispersed was manufactured. The hot-rolled steel sheet was cold-rolled at a reduction ratio of 40-70% and manufactured a cold-rolled steel sheet, and continuously annealed at a temperature of Ac3-50°C to Ac3-20°C. The continuously-annealed steel sheet was primary-cooled to a temperature range of 650-680°C at an average cooling rate of 10°C/s or lower, and secondary-cooled to a temperature range of 300°C-340°C at an average cooling rate of 5°C/s or higher such that fresh martensite was obtained. The steel sheet was reheated to a temperature of Ms or higher and held for 60 seconds or more, thereby forming tempered martensite and bainite. Carbon was concentrated in the surrounding untransformed austenite, and cooling was performed to a temperature of 150°C or lower at an average cooling rate of 5°C/s or higher thereby including fine fresh martensite as the remainder.

By controlling the components and manufacturing process described above, the fraction of ferrite and fresh martensite may be reduced as compared to general DP steel, and tempered martensite and bainite and retained austenite may be included, and accordingly, the yield ratio may be increased as compared to general DP steel, thereby ensuring workability. Also, a large amount of mobile dislocations may be formed around the retained austenite during plastic deformation, which may contribute to improving ductility. The composite structural steel precisely controlled as above may ensure ductility while maintaining a high yield ratio as compared to general DP steel. Accordingly, a high-strength steel sheet having excellent ductility, formability, and weldability may be obtained.

Hereinafter, the technical configuration according to the present disclosure may be described in greater detail with reference to various embodiments and the accompanying drawings.

First, the steel sheet of the present disclosure may include, by weight%, carbon (C): 0.06-0.16%, silicon (Si): 0.8% or less (excluding 0%), manganese (Mn): 1.6-2.6%, molybdenum (Mo) : 0.40% or less (excluding 0%), chromium (Cr) : 1.0% or less (excluding 0%), phosphorus (P): 0.10% or less (excluding 0%), sulfur (S): 0.020% or less (excluding 0%), aluminum (sol.Al): 0.60% or less (excluding 0%), titanium (Ti): 0.001-0.04%, niobium (Nb): 0.001-0.04%, nitrogen (N): 0.01% or less (excluding 0%), boron (B): 0.010% or less (including 0%), and a balance of Fe and inevitable impurities, and may satisfy Relational expression 1.

In the description below, the critical significance of the characteristics and composition range of each alloying element will be briefly described, and in this case, unless otherwise indicated, the content of each component may be represented by weight%.

C: 0.06-0.16%

Carbon (C) may be an important element added to strengthen the transformation structure. Carbon may promote the formation of hard martensite in composite structural steel, thereby improving strength. As the carbon content increases, the amount of martensite may increase. However, when the amount exceeds 0.16%, the strength of martensite may increase, but the strength difference with ferrite, which has a low carbon concentration, may increase. Due to this strength difference, fracture may easily occur at an interfacial surface between phases during plastic deformation, which may degrade ductility and work hardening rate. Also, weldability may deteriorate, such that welding defects may occur during parts processing by customer. When the carbon content is lowered to less than 0.06%, it may be difficult to ensure the desired strength, and thus, it may be preferable to limit the content to 0.06-0.16%. More preferably, the carbon content may be limited to the range of 0.07-0.15%.

Si: 0.8% or less (excluding 0%)

Silicon (Si) may be a ferrite stabilizing element which promotes ferrite transformation and may contribute to the formation of retained austenite by promoting carbon concentration in untransformed austenite during the Q&P process. Silicon (Si) may also be effective in reducing a hardness difference between phases by increasing strength of ferrite through solid-solution strengthening, and may be useful in ensuring strength without lowering ductility of the steel sheet. However, when the content exceeds 0.8%, surface scale defects may occur, which adversely affects surface quality and may also reduce weldability and chemical treatment properties. Thus, it may be preferable to limit the addition amount to 0.8% or less, and more preferably, to 0.7% or less.

Mn: 1.6-2.6%

Manganese (Mn) may refine particles without lowering ductility, may completely precipitate sulfur (S) in steel as MnS, and may thus prevent hot embrittlement due to the formation of FeS, and may strengthen steel. Also, manganese (Mn) may lower the critical cooling rate at which the martensite phase is obtained in composite structural steel, such that martensite may be easily formed. When the manganese content is less than 1.6%, it may be difficult to ensure the strength targeted in the present disclosure. When the content exceeds 2.6%, there may be issues in weldability and hot-rolling, and martensite may be formed excessively, such that the material may become unstable. Also, Mn-Band (band of Mn oxide) may be formed in the structure, which may increase the risk of processing cracks and breakage. Also, Mn oxide may be dissolved on the surface during annealing, which may significantly deteriorate the surface quality. Accordingly, in the present disclosure, it may be preferable to limit the content of Mn in the range of 1.6-2.6%, and more preferably, to the range of 1.8-2.4%.

Mo: 0.40% or less (excluding 0%)

Molybdenum (Mo) may delay the transformation of austenite into pearlite and may improve the refinement and strength of ferrite. Mo may have the advantage of improving hardenability of steel and forming martensite finely at grain boundaries, thereby enabling yield ratio control. However, as molybdenum (Mo) is an expensive element, the manufacturing cost may increase as the content increases, which may be disadvantageous in terms of cost. Thus, it may be preferable to appropriately control the content. In order to obtain the above-mentioned effect, it may be preferable to add up to 0.40%, and when the content of Mo exceeds 0.40%, alloy cost may rapidly increase, which may not be economical. Also, due to excessive grain refinement effect and solid-solution strengthening effect, ductility of the steel may rather be reduced. Accordingly, in the present disclosure, it may be preferable to limit the content of Mo to 0.40% or less, and more preferably, to 0.20% or less. In the present disclosure, as for Mo, considering the amount inevitably added during manufacturing, 0% may be excluded.

Cr: 1.0% or less (excluding 0%)

Chromium (Cr) may be added to improve hardenability of steel and to ensure high strength. Also, chromium (Cr) may be important in formation of martensite, chromium (Cr) may be advantageous in manufacturing of composite structural steel having high ductility by minimizing the decrease in elongation as compared to the increase in strength. In particular, chromium (Cr) may form Cr-based carbides such as $Cr_{23}C_6$ during the hot-rolling process, and some of these carbides may be dissolved during the annealing process, and some may remain undissolved, such that the solid-solution C content in martensite may be controlled to an appropriate level or less after cooling, thereby suppressing yield point elongation, which may be advantageous for manufacturing composite structural steel having a low yield ratio. When the content exceeds 1.0%, the effect may be saturated, and also cold-rolling properties may deteriorate due to excessive increase in hot-rolled strength, and since the fraction of Cr-based carbides increases and coarsens, the martensite size may coarsen after annealing, which may cause a decrease in elongation. Thus, in the present disclosure, it may be preferable to limit the Cr content to 1.0% or less, and more preferably, it may be limited to 0.8% or less. In the present disclosure, 0% may be excluded considering the amount of Cr inevitably added during manufacturing.

P: 0.10% or less (excluding 0%)

Phosphorus (P) may be a substitutional element having the greatest solid-solution strengthening effect, and may be the most advantageous element for improving in-plane anisotropy and ensuring strength without significantly reducing formability. However, when phosphorus (P) is excessively added to a predetermined level or more, the possibility of brittle fracture may greatly increase, so that phosphorus (P) may act as element for the possibility of slab breakage during hot-rolling and for degrading the surface properties of the plating. Therefore, the content may be limited up to 0.10% in the present disclosure, and considering the level inevitably added, 0% may be excluded.

S: 0.020% or less (excluding 0%)

Sulfur (S) may be an impurity element inevitably added to steel and may reduce ductility and weldability. Thus, it may be important to manage the content as low as possible. In particular, since sulfur (S) may increase the possibility of causing red-hot embrittlement, it may be preferable to control the content to 0.020% or less. However, considering the level inevitably added during the manufacturing process, 0% may be excluded.

sol.Al: 0.60% or less (excluding 0%)

Acid-soluble aluminum (sol.Al) may be added for grain refinement and deoxidation of steel, and may be a ferrite stabilizing element similarly to Si. Acid-soluble aluminum (sol.Al) may also be effective for distributing carbon in ferrite to austenite to improve martensite hardenability and to form retained austenite. Acid-soluble aluminum (sol.Al) may be useful in effectively suppressing precipitation of carbides in bainite during holding in the bainite region during annealing, thereby improving ductility of the steel sheet. However, when the content exceeds 0.60%, it may be advantageous for increasing strength due to the grain refinement effect, but it is highly likely that the plated steel sheet surface defects may occur due to excessive formation of inclusions during the steelmaking continuous casting operation, and manufacturing costs may increase. Accordingly, in the present disclosure, it may be preferable to control the content of sol.Al to 0.60% or less, and more preferably, to 0.40% or less.

Ti, Nb: 0.001-0.04% each

Titanium (Ti) and niobium (Nb) may be effective for increasing strength of steel sheet and grain refinement by forming nano precipitates, respectively. When these elements are added, the elements may combine with carbon and may form fine nano precipitates, and these nano precipitates may strengthen the matrix structure and may reduce the hardness difference between phases. When the content of each of Ti and Nb is less than 0.001%, it may be difficult to ensure such an effect, and when each content exceeds 0.04%, the manufacturing cost may increase and ductility may be significantly reduced due to excessive precipitates. Thus, in the present disclosure, each of the contents may be limited to 0.001-0.04%.

N: 0.01% or less (excluding 0%)

Nitrogen (N) may be effective in stabilizing austenite, but when the content exceeds 0.01%, the refining cost of the steel may increase greatly, and the risk of cracks occurring during casting due to AlN formation may greatly increases, and thus, it may be preferable to limit an upper limit to 0.01%. However, considering the level inevitably added, 0% may be excluded.

B: 0.010% or less (including 0%)

Boron (B) may delay transformation of austenite into pearlite during the cooling process during annealing, and may be a hardening element which suppresses ferrite formation and promotes martensite formation. When the content exceeds 0.01%, excessive B may be concentrated on the surface, which may cause deterioration of plating adhesion. Thus, the content may be controlled to 0.010% or less, and more preferably, the element may be added to 0.005% or less.

$$[\text{Relational expression 1}]$$

$$C + Si/30 + Mn/20 + (Cr+Mo)/5 \geq 0.300$$

Here, C, Si, Mn, Cr and Mo may indicate content% of steel components in a matrix structure of a thickness of a base steel sheet at 1/4t point.

In the present disclosure, it may be important to control C, Si, Al, Cr, and Mo content among the alloy components in the matrix structure of a thickness of a base steel sheet at 1/4t point to satisfy relational expression 1.

Si and Al may be ferrite stabilizing elements, and may promote ferrite transformation and may contribute to formation of retained austenite and martensite by promoting C enrichment into untransformed austenite. C may also promote C enrichment in untransformed austenite, and may contribute to martensite formation and fraction adjustment. However, C, Si, and Al may adversely affect weldability, and may cause cracks on the surface and internal region of the welding zone.

Mn, Cr, and Mo may contribute to improving hardenability, but the effects thereof on C enrichment in austenite may be relatively low as compared to C, Si, and Al. Thus, it may be important to properly adjust the ratio of C, Si, Al and other hardenable elements Mn, Cr, and Mo.

When the value defined by relational expression 1 is 0.300 or more, relational expression HER*EL*YS/TS of hole expandability (HER), yield strength (YS), tensile strength (TS), and elongation (EL) may be ensured to be 500 or more. Also, by ensuring the sum of bainite and tempered martensite to be 30% or more and 60% or less and reducing the hardness difference between phases, hole expandability value may be ensured to be 30% or more and the required ductility may be ensured. Further, the yield ratio (YS/TS) may be ensured to be 0.65 or more. However, when the value defined by relational expression 1 is less than 0.300, the aforementioned effect may not be expected.

In the present disclosure, in addition to the components described above, a balance of Fe and inevitable impurities may be included.

The steel sheet of the present disclosure may be a composite structure steel sheet, and may improve workability by increasing the yield ratio as compared to general DP steel while ensuring a predetermined degree of ductility. To this end, in addition to the aforementioned alloy composition, it may be necessary to satisfy the microstructure and phase fraction control conditions as below.

Specifically, the steel sheet of the present disclosure may have a microstructure in which, by area%, 20% or more and 40% or less of ferrite, 30% or more and 60% or less of bainite and tempered martensite in total, a remainder of fresh martensite and retained austenite, and the area fraction of the retained austenite may be less than 5% (excluding 0%).

In order to satisfy the lean composition and high ductility, the characteristics of DP steel, while improving the yield ratio (YS/TS) as compared to general DP steel, control over the structure and composition, and careful heat treatment may be essential. First, it may be important to obtain a small amount of retained austenite. Retained austenite may allow transformation-induced plasticity and may contribute to improving ductility of the steel sheet. To obtain the retained austenite, the quenching & Partitioning (Q&P) process including forming fresh martensite by cooling to a temperature of Ms or lower during rapid cooling, and reheating to a temperature of Ms or higher may be performed. In this case, a large amount of tempered martensite and bainite may be formed, and C may be stably distributed and may contribute to formation of a small amount of retained austenite in the final structure. Carefully controlling the fraction of tempered martensite and bainite may also be important to ensure high hole expandability and ductility. The fraction of ferrite may be controlled during annealing through two-phase region annealing close to the single-phase region, and formation of fresh martensite may be suppressed as much as possible through the Q&P process of rapidly cooling to Ms temperature or lower and reheating to Ms temperature or higher. Also, by precipitating fine nano-precipitates in ferrite, the hardness difference between phases may be further reduced, thereby improving workability. Finally, by including a small amount of fresh martensite during the final cooling, the desired strength may be ensured.

Therefore, in the microstructure forming the steel sheet of the present disclosure, the amount of bainite and tempered martensite may be controlled to 30% or more and 60% or less in total. When the total amount of bainite and tempered martensite is less than 30%, the desired yield ratio and hole expandability may not be ensured. More preferably, the total amount of bainite and tempered martensite may be limited to 40% or more.

Also, in the present disclosure, it may be preferable to limit the ferrite fraction in the microstructure forming the steel sheet to 20% or more and 40% or less. When the fraction exceeds 40%, the desired yield ratio and hole expandability may not be ensured. More preferably, the fraction of the ferrite organization may be limited to 30% or less.

The steel sheet of the present disclosure may have a microstructure including a remainder of fresh martensite and retained austenite, and an area fraction of the retained austenite may be less than 5% (excluding 0%). When a fraction of the retained austenite is to be 5% or more, the Si content may need to increase, and in this case, the LME problem may occur. More preferably, the fraction of the retained austenite may be limited to the range of 1-4 area%.

The steel sheet of the present disclosure having the microstructure as described above may have improved processability and formability by having an excellent yield ratio as compared to general DP steel due to the effect of uniform microstructure. Specifically, through this, the steel sheet of which the value by relational expression 2 of hole expandability (HER), yield strength (YS), tensile strength (TS) and elongation (EL) may be 500 or more, the yield ratio (YS/TS) may be 0.65 or more, and which has excellent ductility, formability, and weldability without LME cracks on the surface and the internal region of the welding zone may be provided.

$$\texttt{[Relational expression 2]}$$

$$\texttt{HER*EL*YS/TS} \geq \texttt{500}$$

In the description below, the method for manufacturing the steel sheet of the present disclosure will be described in detail.

The method for manufacturing the steel sheet of the present disclosure may include preparing and reheating a steel slab satisfying the above-mentioned steel composition and relational expression 1; hot-rolling the reheated steel slab such that a finishing-rolling outlet temperature becomes Ar3-Ar3+50°C, coiling at 400-650°C and cooling to room temperature at an average cooling rate of 0.1°C/s or lower; cold-rolling the cooled hot-rolled steel sheet at a reduction ratio of 40-70% and manufacturing a cold-rolled steel sheet; continuously-annealing the cold-rolled steel sheet at a temperature of Ac3-50°C to Ac3-20°C; primary-cooling the continuously-annealed cold-rolled steel sheet to a temperature range of 650-680°C at an average cooling rate of 10°C/s or lower, and secondary-cooling to a temperature range of 300-340°C at an average cooling rate of 5°C/s or higher; reheating the secondary-cooled cold-rolled steel sheet to a temperature of Ms or higher and holding for 60 seconds or more; and cooling the held cold-rolled steel sheet to a temperature of 150°C or lower at an average cooling rate of 5°C/s or higher.

First, in the present disclosure, the steel slab formed as described above may be reheated under general conditions. The reheating the slab may be a process of heating the steel slab to smoothly perform the subsequent rolling process and to sufficiently obtain the target properties of the steel sheet. The present disclosure is not particularly limited to these reheating conditions, and general reheating conditions may be sufficient. As an example, reheating may be performed in a temperature range of 1100-1300°C.

Thereafter, in the present disclosure, the reheated steel slab may be hot-rolled such that the finishing-rolling outlet temperature becomes Ar3 to Ar3+50°C, and thereafter, the steel slab may be coiled at 400-650°C, and may be cooled to room temperature at an average cooling rate of 0.1°C/s or lower.

The reheated steel slab may be finished hot-rolled at the $Ar_3$ transformation point or more under general conditions. In this case, the present disclosure is not limited to specific hot-rolling conditions, and general hot-rolling temperatures may be used. For example, the finishing hot-rolling may be performed in a temperature range of 800-1000°C.

Thereafter, in the present disclosure, the finishing hot-rolled steel sheet may be coiled in the temperature range of 400-650°C and cooled to room temperature at an average cooling rate of 0.1°C/s or lower, thereby manufacturing a hot-rolled steel sheet in which carbides serving as austenite nucleation sites are finely dispersed. By evenly dispersing the fine carbides during the hot rolling process, the carbides may be dissolved in the subsequent annealing process and may finely disperse austenite, thereby uniformly dispersing fine martensite after annealing.

In the present disclosure, the cold-rolled steel sheet may be manufactured by cold-rolling the cooled hot-rolled steel sheet at a reduction ratio of 40-70%. When the cold reduction ratio is less than 40%, it may be difficult to ensure the target thickness, and it may also be difficult to correct the shape of the steel sheet, whereas when the content exceeds 70%, it is highly likely that cracks may occur at the edge of the steel sheet and a cold-rolling load may be caused. Thus, in the present disclosure, it may be preferable to limit the cold reduction ratio to 40-70%.

Thereafter, in the present disclosure, the cold-rolled steel sheet may be continuously annealed in the temperature range of Ac3-50°C to Ac3-20°C. The continuous annealing may be to implement the optimal microstructure fraction by controlling the fractions of ferrite and austenite. When the continuous annealing temperature is less than Ac3-50°C, it may be difficult to ensure a sufficient austenite fraction, such that the ferrite fraction may increase after annealing, and the desired formability and strength may not be ensured. When Ac3-20°C is exceeded, excessive austenite may be formed, and the grain size may become too coarse, such that it may be difficult to ensure desired ductility. Also, the surface concentration due to elements that deteriorate the surface quality, such as Si, Mn and B, may become severe, which may deteriorate the surface quality. Considering this, in the present disclosure, it may be preferable to limit the continuous-annealing temperature to Ac3-50°C to Ac3-20°C. More preferably, the continuous-annealing may be performed in the temperature range of 810-850°C.

In the present disclosure, the continuous-annealed cold-rolled steel sheet may be primary-cooled to a temperature range of 650-680°C at an average cooling rate of 10°C/s or lower, and may be secondary-cooled to a temperature range of 300-340°C at an average cooling rate of 5°C/s or higher, thereby obtaining fresh martensite. In this case, in the present disclosure, the steel sheet may also be cooled using hydrogen gas through a hydrogen quenching facility during the secondary-cooling.

In the present disclosure, it may be important to control the quenching temperature during the secondary-cooling to Ms or lower of 300-340°C, which is the martensite formation temperature. When the content exceeds 340°C, the initially formed martensite fraction may be significantly small or it may be difficult to form martensite, such that it may be difficult to form tempered martensite and bainite of the desired fraction during the final cooling, and the desired hole expandability may not be obtained. Also, when the temperature is lowered to less than 300°C, the fraction of tempered martensite and bainite may be excessive, such that it may be difficult to form fresh martensite of the desired fraction during the final cooling, and the desired strength may not be obtained.

Thereafter, in the present disclosure, the secondary-cooled cold-rolled steel sheet may be reheated to a temperature of Ms or higher and may be held for 60 seconds or more.

In the present disclosure, after the first slow cooling process and the second rapid cooling process to Ms or lower, it may be important to control the rapid cooling temperature and reheating temperature in the Q&P process of reheating to Ms or higher and to form the desired microstructure, and by holding the reheated cold-rolled steel sheet for 60 seconds or more, tempered martensite and bainite may be formed and carbon may be concentrated in the surrounding untransformed austenite.

Thereafter, in the present disclosure, the held cold-rolled steel sheet may be cooled to a temperature of 150°C or lower at an average cooling rate of 5°C/s or higher, thereby obtaining fine fresh martensite.

If necessary, skin-pass rolling of less than 1% may be performed on the cooled steel sheet.

If necessary, by performing one of hot-dip galvanizing and alloying hot-dip galvanizing plating treatments on the cooled steel sheet, a hot-dip galvanized steel sheet or an alloying hot-dip galvanizing steel sheet may be manufactured.

Mode for Invention

Hereinafter, the present disclosure may be described in detail through preferable embodiments. However, it should be noted that the embodiments as below are only intended to describe the present disclosure in greater detail, and is not intended to limit the scope of the present disclosure.

(Example)

Steel slabs having the compositions as in Table 1 below was prepared, reheated in the temperature range of 1050-1250°C and finished hot-rolled in the temperature range of Ar3+50°C, which is the Ar3 transformation point temperature or more. The hot-rolled steel sheets were coiled at 400-650°C and cooled at a cooling rate of 0.1°C per second or lower and hot-rolled steel sheets were manufactured. The hot-rolled steel sheets were pickled, cold-rolled with a reduction ratio of 40-70%, and continuous annealed under the conditions as in Table 2 below, and Q&P heat treatment was performed. Thereafter, the steel sheet was cooled to a temperature of 150°C or lower at an average cooling rate of 5°C/s or higher, and skin-pass rolling of less than 1% was performed, thereby manufacturing the final steel sheet. In this experiment, during the Q&P heat treatment, the cooling rate during primary cooling was 6°C/s, the cooling rate during secondary cooling was 15°C/s, and the holding time after reheating was 200 seconds, which were applied identically.

The mechanical properties and microstructure properties of each steel sheet manufactured as described above were evaluated, and the results are listed in Table 3 below. In this case, the tensile test for each test sample was performed in the C direction using the JIS standard to evaluate the tensile properties. The microstructure fraction was analyzed using the results of matrix structure at 1/4t point of the thickness of the annealed steel sheet. Specifically, ferrite, bainite, martensite, and austenite fractions were measured using FE-SEM and image analyzer after nital corrosion. Also, hole expandability was measured using a hole expandability tester. Also, the occurrence of spot welding LME cracks was evaluated.

[Table 1]

| Classif ication | Alloy composition (weight%) | | | | | | | | | | | Relational expression 1 |
|---|---|---|---|---|---|---|---|---|---|---|---|---|
| | C | Si | Mn | P | S | Sol.A l | Nb | Ti | B | Cr | Mo | |
| Inventi ve steel 1 | 0.14 | 0.7 | 2.0 | 0.01 | 0.002 | 0.04 | 0.02 | 0.02 | - | 0.2 | 0.1 | 0.323 |
| Inventi ve steel 2 | 0.09 | 0.6 | 2.4 | 0.01 | 0.002 | 0.03 | 0.03 | 0.02 | - | 0.4 | 0.05 | 0.320 |
| Inventi ve steel 3 | 0.07 | 0.4 | 2.4 | 0.01 | 0.002 | 0.03 | 0.03 | 0.03 | 0.002 | 0.5 | 0.03 | 0.309 |
| Inventi ve steel 4 | 0.14 | 0.6 | 1.9 | 0.01 | 0.002 | 0.05 | 0.02 | 0.01 | - | 0.4 | 0.05 | 0.345 |
| Compara tive steel 1 | 0.07 | 1.0 | 2.3 | 0.01 | 0.002 | 0.04 | 0.02 | - | - | 0.1 | 0.02 | 0.242 |
| Compara tive steel 2 | 0.10 | 1.2 | 2.0 | 0.01 | 0.002 | 0.03 | - | - | - | 0.2 | 0.03 | 0.286 |
| Compara tive steel 3 | 0.14 | 1.0 | 2.1 | 0.01 | 0.002 | 0.03 | 0.03 | 0.02 | 0.002 | 0.03 | 0.05 | 0.294 |
| Compara tive steel 4 | 0.13 | 1.4 | 1.8 | 0.01 | 0.002 | 0.03 | 0.02 | 0.02 | - | 0.04 | 0.02 | 0.279 |

* In Table 1, the residual components are Fe and unavoidable impurities. Relational expression 1 is C+Si/30+Mn/20+ (Cr+Mo)/5.
* In Table 1, N is contained at the level of 30-50 ppm for all the steels.

[Table 2]

| Steel type | Annealing temperature (°C) | Primary-cooling end temperature (°C) | Secondary-cooling end temperature (°C) | Reheating temperature (°C) | Notes |
|---|---|---|---|---|---|
| Inventi ve steel 1 | 830 | 670 | 330 | 480 | Inventive example 1 |
| | 860 | 670 | 335 | 477 | Comparati ve example 1 |
| | 790 | 668 | 329 | 480 | Comparati ve example 2 |
| | 829 | 669 | 400 | 480 | Comparati ve example 3 |
| | 832 | 663 | 300 | 480 | Comparati ve example 4 |
| Inventi ve steel 2 | 820 | 650 | 325 | 491 | Inventive example 2 |
| Inventi ve steel 3 | 825 | 660 | 331 | 482 | Inventive example 3 |
| Inventi ve steel 4 | 824 | 658 | 319 | 475 | Inventive example 4 |
| Compara tive steel 1 | 825 | 670 | 330 | 480 | Comparati ve example 5 |
| Compara tive steel 2 | 831 | 669 | 340 | 480 | Comparati ve example 6 |
| Compara tive steel 3 | 819 | 655 | 335 | 479 | Comparati ve example 7 |
| Compara tive steel 4 | 822 | 667 | 333 | 480 | Comparati ve example 8 |

[Table 3]

| Steel type | Phase fraction (area%) | | | | Mechanical properties | | | | | | LME | Notes |
|---|---|---|---|---|---|---|---|---|---|---|---|---|
| | F | B+TM | FM | RA | YS (MPa) | TS (MPa) | El (%) | HER (%) | Yield ratio | S* | | |
| Inventive steel 1 | 27 | 44 | 26 | 3 | 525 | 807 | 22 | 39 | 0.65 | 555 | OK | Inventi ve example 1 |
| | 9 | 52 | 36 | 3 | 565 | 889 | 15 | 49 | 0.64 | 467 | OK | Compara tive example 1 |
| | 57 | 28 | 14 | 1 | 453 | 768 | 25 | 23 | 0.59 | 339 | OK | Compara tive example 2 |
| | 15 | 36 | 49 | 0 | 456 | 795 | 21 | 26 | 0.57 | 313 | OK | Compara tive example 3 |
| | 10 | 69 | 18 | 3 | 554 | 759 | 21 | 36 | 0.73 | 552 | OK | Compara tive example 4 |
| Inven tive steel 2 | 23 | 48 | 26 | 3 | 513 | 786 | 21 | 37 | 0.65 | 503 | OK | Inventi ve example 2 |
| Inven tive steel 3 | 29 | 44 | 25 | 2 | 530 | 792 | 19 | 43 | 0.67 | 527 | OK | Inventi ve example 3 |
| Inven tive steel 4 | 21 | 50 | 25 | 4 | 538 | 789 | 21 | 45 | 0.68 | 644 | OK | Inventi ve example 4 |
| Compa rativ e steel 1 | 36 | 45 | 18 | 1 | 476 | 760 | 24 | 28 | 0.63 | 421 | NG | Compara tive example 5 |
| Compa rativ e steel 2 | 45 | 35 | 14 | 6 | 481 | 757 | 26 | 25 | 0.64 | 413 | NG | Compara tive example 6 |
| Compa rativ e steel 3 | 39 | 39 | 21 | 1 | 459 | 768 | 25 | 23 | 0.60 | 344 | NG | Compara tive example 7 |
| Compa rativ e steel 4 | 48 | 29 | 18 | 5 | 489 | 800 | 23 | 27 | 0.61 | 380 | NG | Compara tive example 8 |

* In Table 3, F is ferrite, B+TM is bainite+tempered martensite, FM is fresh martensite, and RA is retained austenite. Also, S* is relational expression HER*EL*YS/TS.

As indicated in Table 1-3, as for inventive examples 1-4 of which the steel composition range, manufacturing conditions, and steel microstructure satisfied the range of the present disclosure, hole expandability (HER) was 45% or more, and the value by relational expression 2 of hole expandability (HER), yield strength (YS), tensile strength (TS), and elongation (EL) was 500 or more. LME cracks were not created in the surface and the internal region of the welding zone, and a yield ratio (YS/TS) was 0.65 or more, the material and hole expandability and weldability of the steel sheet targeted in present disclosure may be ensured.

In comparative example 1-8 in which the steel composition (relational expression 1) and manufacturing process was out of the range of the present disclosure or the steel microstructure fraction was out of the range of the present disclosure, the value by relational expression 2 of hole expandability (HER), yield strength (YS), tensile strength (TS), and elongation (EL) was less than 500, or the yield ratio (YS/TS) was less than 0.65, and the hole expandability was less than 30%. Thus, the strength, ductility, hole expandability, and weldability of the steel sheet targeted in the present disclosure may not be ensured simultaneously.

Specifically, in comparative example 1, as the annealing temperature was too high, elongation was low and hole expandability was not ensured, and in comparative example 2, the annealing temperature was too low, such that dual-phase ferrite was excessively formed and the target strength was not obtained.

In comparative example 3, the secondary-cooling end temperature was too high such that tempered martensite was not sufficiently ensured, and hole expandability was not ensured.

In comparative example 4, a secondary-cooling end temperature was too low, such that tempered martensite and bainite were excessively formed, which deteriorated the strength.

Also, in comparative examples 5-8, steel compositions (relational expression 1) were out of the range of present disclosure, which did not satisfy the target mechanical properties, and also LME cracks were formed in the surface and the internal region of the welding zone.

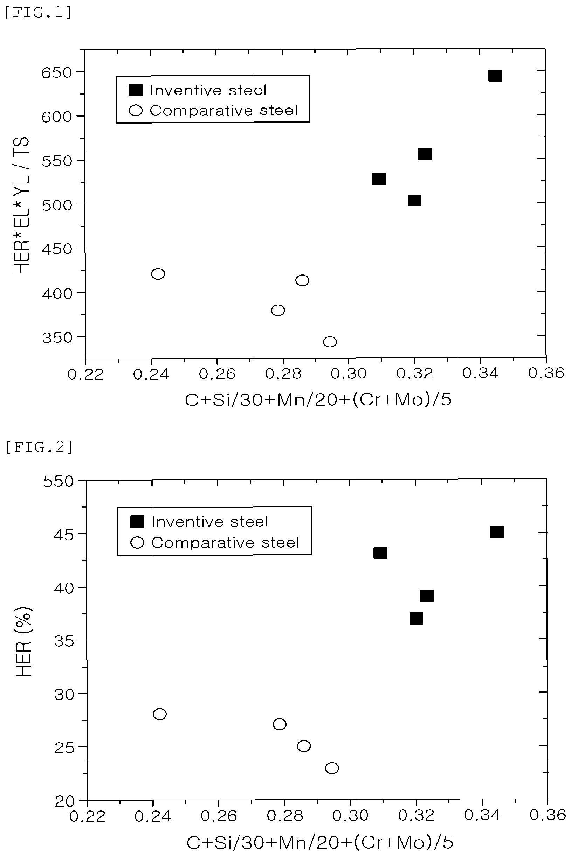

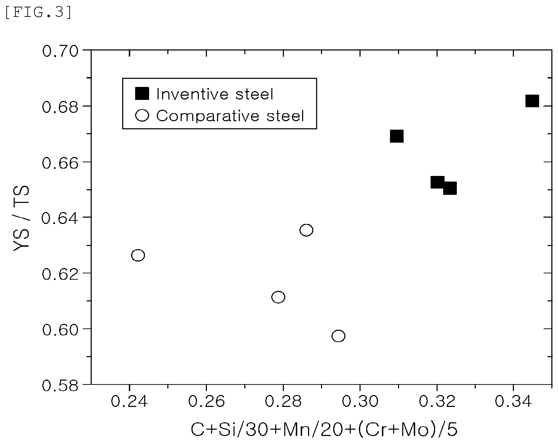

FIG. 1 is an image indicating changes in relational expression HER*EL*YS/TS of hole expandability (HER), yield strength (YS), tensile strength (TS) and elongation (EL) according to relational expression 1 of inventive steel and comparative steel in an example of the present disclosure. FIG. 2 is an image indicating changes in hole expandability (HER) according to relational expression 1 of inventive steel and comparative steel in an example of the present disclosure. FIG. 3 is an image indicating changes in yield ratio according to relational expression 1 of inventive steel and comparative steel in an example of the present disclosure. In FIGS. 1-3, inventive steel refers to the steel corresponding to inventive examples **1-4,** and the comparative steel refers to the steel corresponding to comparative examples 5-8.

As described above, in the detailed description of the present disclosure, described preferable embodiments of the present disclosure has been described; however, it will be apparent to those skilled in the art to which the present disclosure belongs to that various modification may be made without departing from the scope of the present disclosure. Accordingly, the scope of the rights of the present disclosure should not be limited to the described embodiments, but may be determined not only by the scope of the claims described below but also by equivalents thereof.

**Claims**

1. A steel sheet, comprising:

   by weight%, carbon (C): 0.06-0.16%, silicon (Si): 0.8% or less (excluding 0%), manganese (Mn): 1.6-2.6%, molybdenum (Mo): 0.40% or less (excluding 0%), chromium (Cr): 1.0% or less (excluding 0%), phosphorus (P): 0.10% or less (excluding 0%), sulfur (S): 0.020% or less (excluding 0%), aluminum (sol.Al): 0.60% or less (excluding 0%), titanium (Ti): 0.001-0.04%, niobium (Nb): 0.001-0.04%, nitrogen (N): 0.01% or less (excluding 0%), boron (B): 0.010% or less (including 0%), and a balance of Fe and inevitable impurities, wherein C, Si, Mn, Cr and Mo satisfy relational expression 1 as below,
   wherein the steel sheet has a microstructure comprising, by area%, ferrite of 20% or more and 40% or less, bainite and tempered martensite of 30% or more and 60% or less in total, and a remainder of fresh martensite and retained austenite, and in which an area fraction of the retained austenite is less than 5% (excluding 0%), and wherein hole expandability (HER) is 30% or more, and a value by relational expression 2 for hole expandability (HER), yield strength (YS), tensile strength (TS) and elongation (EL) is 500 or more, and a yield ratio (YS/TS) is 0.65 or more:

$$[\text{Relational expression 1}]$$

$$C+Si/30+Mn/20+ (Cr+Mo)/5 \geq 0.300$$

   where Si, Mn, Cr and Mo indicate content% of steel components in a matrix structure of a 1/4t point of a thickness of a base steel sheet,

$$[\text{Relational expression 2}]$$

$$HER*EL*YS/TS \geq 500$$

2. The steel sheet of claim 1, wherein a fraction of the retained austenite satisfies 1-4% by area%.

3. The steel sheet of claim 1, wherein a hot-dip galvanizing layer and an alloying hot-dip galvanizing layer is formed on a surface of at least one side.

4. A method for manufacturing a steel sheet, the method comprising:

preparing and reheating a steel slab comprising, by weight%, carbon (C): 0.06-0.16%, silicon (Si): 0.8% or less (excluding 0%), manganese (Mn): 1.6-2.6%, molybdenum (Mo): 0.40% or less (excluding 0%), chromium (Cr): 1.0% or less (excluding 0%), phosphorus (P): 0.10% or less (excluding 0%), sulfur (S): 0.020% or less (excluding 0%), aluminum (sol.Al): 0.60% or less (excluding 0%), titanium (Ti): 0.001-0.04%, niobium (Nb): 0.001-0.04%, nitrogen (N): 0.01% or less (excluding 0%), boron (B): 0.010% or less (including 0%), and a balance of Fe and inevitable impurities, wherein C, Si, Mn, Cr and Mo satisfy relational expression 1 as below;
hot-rolling the reheated steel slab such that a finishing-rolling outlet temperature becomes Ar3-Ar3+50°C, coiling at 400-650°C and cooling to room temperature at an average cooling rate of 0.1°C/s or lower;
cold-rolling the cooled hot-rolled steel sheet at a reduction ratio of 40-70% and manufacturing a cold-rolled steel sheet;
continuously-annealing the cold-rolled steel sheet at a temperature of Ac3-50°C to Ac3-20°C;
primary-cooling the continuously-annealed cold-rolled steel sheet to a temperature range of 650-680°C at an average cooling rate of 10°C/s or lower, and secondary-cooling to a temperature range of 300-340°C at an average cooling rate of 5°C/s or higher;
reheating the secondary-cooled cold-rolled steel sheet to a temperature of Ms or higher and holding for 60 seconds or more; and
cooling the held cold-rolled steel sheet to a temperature of 150°C or lower at an average cooling rate of 5°C/s or higher:

$$[Relational\ expression\ 1]$$

$$C+Si/30+Mn/20+\ (Cr+Mo)/5 \geq 0.300$$

where Si, Mn, Cr and Mo indicate content% of steel components in a matrix structure of a 1/4t point of a thickness of a base steel sheet.

5. The method of claim 4, wherein continuous annealing is performed in a temperature range of 810-850°C.

6. The method of claim 4, wherein skin-pass rolling of less than 1% is further performed on the cooled steel sheet.

7. The method of claim 4, wherein one of hot-dip galvanizing or alloying hot-dip galvanizing is further performed on the cooled steel sheet.

[FIG.1]

[FIG.2]

[FIG.3]

## INTERNATIONAL SEARCH REPORT

| International application No. |
| --- |
| **PCT/KR2023/020827** |

| A. | CLASSIFICATION OF SUBJECT MATTER |
| --- | --- |

**C22C 38/38**(2006.01)i; **C22C 38/22**(2006.01)i; **C22C 38/06**(2006.01)i; **C22C 38/28**(2006.01)i; **C22C 38/26**(2006.01)i; **C22C 38/00**(2006.01)i; **C21D 8/02**(2006.01)i; **C21D 9/46**(2006.01)i; **C23C 2/06**(2006.01)i

According to International Patent Classification (IPC) or to both national classification and IPC

| B. | FIELDS SEARCHED |
| --- | --- |

Minimum documentation searched (classification system followed by classification symbols)

C22C 38/38(2006.01); C21D 8/02(2006.01); C21D 8/04(2006.01); C22C 38/00(2006.01); C22C 38/02(2006.01); C22C 38/06(2006.01); C22C 38/58(2006.01); C22C 38/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 페라이트(ferrite), 프레시 마르텐사이트(fresh martensite), 템퍼드 마르텐사이트 (tempered martensite), 잔류 오스테나이트(retained austenite), 베이나이트(bainite)

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| X | KR 10-2468040 B1 (POSCO) 17 November 2022 (2022-11-17)<br>See paragraph [0112], and claims 1-3 and 5. | 1-7 |
| A | KR 10-2022-0087156 A (POSCO) 24 June 2022 (2022-06-24)<br>See claims 1-2, 5 and 7. | 1-7 |
| A | KR 10-2022-0053941 A (POSCO) 02 May 2022 (2022-05-02)<br>See claims 1-9. | 1-7 |
| A | KR 10-2012-0062933 A (NIPPON STEEL CORPORATION) 14 June 2012 (2012-06-14)<br>See claims 1-17. | 1-7 |
| A | WO 2022-018481 A1 (ARCELORMITTAL) 27 January 2022 (2022-01-27)<br>See claims 1 and 10-17. | 1-7 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **19 March 2024** | **19 March 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/020827**

| Patent document cited in search report | | | Publication date (day/month/year) | Patent family member(s) | | | Publication date (day/month/year) |
|---|---|---|---|---|---|---|---|
| KR | 10-2468040 | B1 | 17 November 2022 | KR | 10-2022-0048611 | A | 20 April 2022 |
| KR | 10-2022-0087156 | A | 24 June 2022 | KR | 10-2485006 | B1 | 04 January 2023 |
| KR | 10-2022-0053941 | A | 02 May 2022 | CN | 116507753 | A | 28 July 2023 |
| | | | | EP | 4234750 | A1 | 30 August 2023 |
| | | | | JP | 2023-547102 | A | 09 November 2023 |
| | | | | KR | 10-2468051 | B1 | 18 November 2022 |
| | | | | US | 2023-0357881 | A1 | 09 November 2023 |
| | | | | WO | 2022-086050 | A1 | 28 April 2022 |
| KR | 10-2012-0062933 | A | 14 June 2012 | BR | 112012013042 | A2 | 16 August 2016 |
| | | | | BR | 112012013042 | B1 | 19 July 2022 |
| | | | | CA | 2781815 | A1 | 03 June 2011 |
| | | | | CA | 2781815 | C | 14 April 2015 |
| | | | | CN | 102639739 | A | 15 August 2012 |
| | | | | CN | 102639739 | B | 10 September 2014 |
| | | | | EP | 2508640 | A1 | 10 October 2012 |
| | | | | EP | 2508640 | B1 | 11 September 2019 |
| | | | | ES | 2758553 | T3 | 05 May 2020 |
| | | | | JP | 4949536 | B2 | 13 June 2012 |
| | | | | JP | WO2011-065591 | A1 | 18 April 2013 |
| | | | | KR | 10-1445813 | B1 | 01 October 2014 |
| | | | | MX | 2012005953 | A | 14 June 2012 |
| | | | | MX | 360965 | B | 23 November 2018 |
| | | | | PL | 2508640 | T3 | 28 February 2020 |
| | | | | US | 10023947 | B2 | 17 July 2018 |
| | | | | US | 2012-0222781 | A1 | 06 September 2012 |
| | | | | WO | 2011-065591 | A1 | 03 June 2011 |
| WO | 2022-018481 | A1 | 27 January 2022 | BR | 112022023896 | A2 | 31 January 2023 |
| | | | | CA | 3183159 | A1 | 27 October 2022 |
| | | | | CN | 115698365 | A | 03 February 2023 |
| | | | | EP | 4182488 | A1 | 24 May 2023 |
| | | | | JP | 2023-534180 | A | 08 August 2023 |
| | | | | KR | 10-2023-0016218 | A | 01 February 2023 |
| | | | | US | 2023-0287531 | A1 | 14 September 2023 |
| | | | | ZA | 202212175 | B | 28 June 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20180165176
- JP 2010090432 A
- JP 2015106696 A